# DEMANDE DE BREVET EUROPEEN

(11) **EP 1 152 257 A1**
(43) Date de publication de la demande: **07.11.2001**
(21) Numéro de dépôt: 01410043.2
(22) Date de dépôt: 04.05.2001
(51) Int. Cl.: G01S 13/02, G06K 7/00, G06K 19/07

(54) **Amélioration de la capacité de démodulation d'un transpondeur électromagnétique**

(30) Priorité: 05.05.2000 FR 0005802
(71) Demandeur: STMicroelectronics S.A., 92120 Montrouge (FR)
(72) Inventeur: Bardouillet, Michel, 13790 Rousset (FR); Donat, Nathalie, 13530 Trets (FR); Tiwari, Vineet, Bât. C, 13090 Aix en Provence (FR)
(74) Mandataire: de Beaumont, Michel

(57) **Abrégé**

L'invention concerne un transpondeur électromagnétique comprenant un circuit oscillant propre à extraire d'un champ rayonnant un signal haute fréquence modulé en amplitude, des moyens pour extraire dudit signal haute fréquence une tension approximativement continue d'alimentation, un démodulateur de données véhiculées par le signal haute fréquence, et des moyens (61, 70) pour réguler séparément la tension d'alimentation (Va) et une tension utile (Vd) véhiculant les données.

## Description

La présente invention concerne un transpondeur électromagnétique, c'est-à-dire un émetteur/récepteur (le plus souvent mobile) susceptible d'être interrogé, sans contact et sans fil, par une entité (généralement fixe), dite borne de lecture et/ou écriture. La présente invention concerne, plus particulièrement, des transpondeurs dépourvus d'alimentation autonome. Ces transpondeurs extraient l'alimentation nécessaire aux circuits électroniques qu'ils comportent d'un champ haute fréquence rayonné par une antenne de la borne de lecture et d'écriture, les informations transmises de l'entité fixe vers le transpondeur sont transmises par ce champ haute fréquence en modulation d'amplitude. L'invention s'applique à de tels transpondeurs, qu'il s'agisse de transpondeurs à lecture seule, c'est-à-dire propres à fonctionner avec une borne se contentant de lire les données du transpondeur, ou de transpondeurs à lecture-écriture qui contiennent des données qui peuvent être modifiées par la borne.

Les systèmes utilisant des transpondeurs électromagnétiques sont basés sur l'emploi de circuits oscillants comprenant un enroulement formant une antenne côté transpondeur et côté borne de lecture-écriture. Ces circuits sont destinés à être couplés par champ magnétique proche lorsque le transpondeur entre dans le champ de la borne de lecture-écriture.

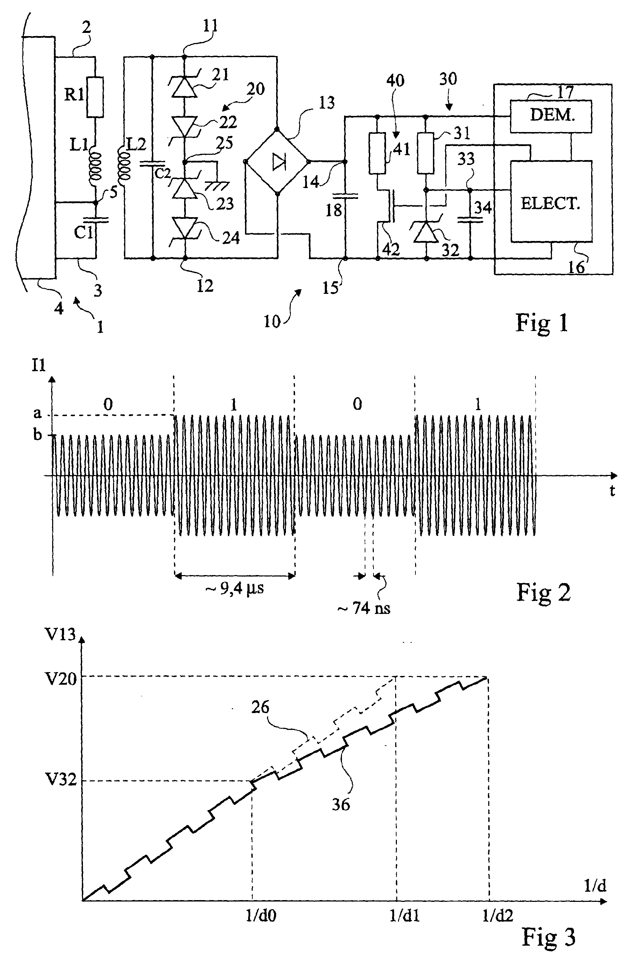

La figure 1 représente, de façon très schématique et simplifiée, un exemple classique de système d'échange de données entre une borne 1 de lecture-écriture et un transpondeur 10 du type auquel s'applique la présente invention.

Généralement, la borne 1 est essentiellement constituée d'un circuit oscillant série, formé d'une inductance L1, en série avec un condensateur C1 et une résistance R1, entre une borne 2 de sortie d'un amplificateur ou coupleur d'antenne (non représenté) et une borne 3 de référence (généralement, la masse). Le coupleur d'antenne fait partie d'un circuit 4 de commande du circuit oscillant et d'exploitation des données reçues comprenant, entre autres, un modulateur/démodulateur et un microprocesseur de traitement des commandes et des données. Dans l'exemple représenté à la figure 1, le point 5 de connexion du condensateur C1 et de l'inductance L1 constitue une borne de prélèvement d'un signal de données reçues à destination du démodulateur. Le circuit 4 de la borne communique généralement avec différents circuits d'entrée/sortie (clavier, écran, moyen d'échange avec un serveur, etc.) et/ou de traitements non représentés. Les circuits de la borne de lecture-écriture tirent généralement l'énergie nécessaire à leur fonctionnement d'un circuit d'alimentation (non représenté) raccordé, par exemple, au réseau de distribution électrique ou à des batteries.

Un transpondeur 10, destiné à coopérer avec une borne 1, comporte essentiellement un circuit oscillant parallèle formé d'une inductance L2 en parallèle avec un condensateur C2 entre deux bornes 11, 12 d'entrée alternative d'un circuit 13 de redressement (par exemple, un pont redresseur double alternance) . La tension de sortie du pont 13, prélevée aux bornes 14, 15 de sortie redressée de celui-ci, est destinée à fournir, non seulement une énergie d'alimentation à des circuits électroniques 16 (ELEC) de traitement des données mais également les données elles-mêmes, modulées en amplitude à destination d'un démodulateur 17 (DEM).

Comme le transpondeur 10 tire son énergie du champ rayonné par la borne 1, il est nécessaire de prévoir un circuit 20 de limitation de la tension d'entrée du système de redressement 13 qui risquerait autrement d'être endommagé par des tensions trop élevées ou de véhiculer ces tensions trop élevées en aval et d'endommager ainsi les circuits électroniques. Le circuit 20 de protection est généralement placé le plus en amont possible, c'est-à-dire en amont du pont 13. Il est, par exemple, constitué de deux associations en série-opposition de diodes Zener 21, 22, 23, 24 de seuils identiques. Comme on est en amont du pont de redressement 13, une première association en série-opposition de diodes Zener 21 et 22 est connectée entre la borne 11 et une borne 25 de masse (par exemple, confondue avec la borne 16 de masse en sortie du pont 13). Une deuxième association en série-opposition de diodes Zener 23 et 24 est connectée entre les bornes 12 et 25.

Dans l'exemple de la figure 1, le transpondeur comporte, en aval du pont 13, un circuit de régulation de tension 30 dont le rôle est de fournir une alimentation la plus régulière possible aux circuits électroniques 16. Par exemple, le circuit 30 est constitué d'une résistance 31 en série avec une diode Zener 32, entre les bornes 14 et 15. Le point milieu 33 de cette association en série constitue une borne de sortie délivrant une tension d'alimentation approximativement continue au circuit 16. Cette tension d'alimentation est lissée par un condensateur 34 en parallèle avec la diode Zener 32 dont l'anode est connectée à la borne 15 et dont la cathode est connectée à la borne 33. On notera qu'un autre condensateur 18 est généralement connecté directement entre les bornes 14 et 15 pour lisser la tension à destination du démodulateur 17 comme on le verra par la suite.

L'émission d'information du transpondeur 10 vers la borne 1 s'effectue généralement en modifiant la charge constituée par ce transpondeur sur le champ de la borne. Pour cela, un moyen simple est de connecter, entre les bornes 14 et 15, un circuit 40 dit de rétromodulation. Ce circuit est, de façon simplifiée, constitué d'une résistance 41 en série avec un commutateur 42 (par exemple, un transistor MOS) dont la borne de commande est connectée au circuit électronique 16, plus précisément, à la sortie d'un modulateur (non représenté).

Le circuit oscillant de la borne 1 est excité par un signal haute fréquence, par exemple, à 13,56 MHz. Les circuits oscillants de la borne 1 et du transpondeur 10 sont généralement accordés sur la fréquence de la porteuse de transmission correspondant à ce signal haute fréquence, c'est-à-dire que leurs fréquences de résonance respectives sont réglées sur une fréquence de, par exemple, 13,56 MHz. Cet accord a pour objet de maximiser la diffusion de l'énergie vers le transpondeur, généralement une carte de forme carte de crédit ou une étiquette (TAG) de format encore inférieur, intégrant les différents constituants du transpondeur. La porteuse de téléalimentation haute fréquence émise par la borne 1 sert également de porteuse de transmission de données. Cette porteuse est généralement modulée en amplitude par la borne selon différentes techniques de codage de façon à transmettre les données au transpondeur. En réponse, la rétromodulation effectuée par le transpondeur est généralement à une fréquence nettement inférieure (par exemple, 847 kHz), ce qui permet à la borne de détecter les variations de charge (que ce soit par une démodulation d'amplitude ou de phase).

La figure 2 illustre un exemple classique de transmission de données de la borne 1 vers un transpondeur 10. Cette figure représente un exemple d'allure du signal d'excitation de l'antenne L1 pour une transmission d'un code 0101. La modulation couramment utilisée est une modulation d'amplitude avec un débit de 106 kbits par seconde (1 bit est transmis en environ 9,4 microsecondes) nettement inférieur à la fréquence de la porteuse provenant de l'oscillateur de transmission (période d'environ 74 nanosecondes pour une fréquence de 13,56 MHz). La modulation d'amplitude s'effectue généralement avec un taux de modulation, défini comme étant la différence des amplitudes crête (a, b) entre deux états (1 et 0), divisée par la somme de ces amplitudes, nettement inférieur à l'unité en raison du besoin d'alimentation du transpondeur 10. Par exemple, le taux de modulation est de l'ordre de 10 %. On notera que quel que soit le type de codage de données utilisé (NRZ, NRZi, BPSK, Manchester, ASK, etc.), la transmission s'effectue par saut entre deux niveaux binaires sur la porteuse de téléalimentation.

Un inconvénient des transpondeurs classiques est que le recours à des moyens d'écrêtement (20, figure 1) de la tension récupérée aux bornes du circuit oscillant (L2, C2, figure 1) nuit à la réception correcte des données dans une transmission par sauts d'amplitude qui ne soit pas en tout pour rien. En effet, si le transpondeur est relativement proche de la borne, la tension est susceptible d'être écrêtée par le circuit 20 de telle manière que le démodulateur du transpondeur est alors incapable de distinguer un état 0 d'un état 1 en raison du taux de modulation utilisé. De plus, cette perte d'information peut se produire sans que le niveau d'écrêtement soit inférieur au niveau de l'état 0 (b, figure 2). Il suffit en effet que le niveau à l'état 1 soit écrêté pour qu'il y ait un risque d'erreur d'interprétation par le démodulateur du transpondeur.

Cet inconvénient est illustré par la figure 3 qui représente un exemple simplifié d'allure de la tension V13 entre les bornes 14 et 15 (figure 1) de sortie du pont redresseur 13 en fonction de l'inverse de la distance d séparant le transpondeur de la borne. Comme les allures de signaux de la figure 3 qui seront décrits ci-après font apparaître une modulation d'amplitude de la porteuse de téléalimentation, on peut aussi considérer que la tension V13 est exprimée en fonction du temps alors que le transpondeur se rapproche progressivement de la borne.

Une première courbe 26 en pointillés illustre le fonctionnement du transpondeur en l'absence d'un circuit 30 de régulation. Dans une telle configuration, la tension aux bornes du condensateur C2 est écrêtée dès que le seuil V20 des diodes Zener du circuit 20 est atteint. Par conséquent, on peut considérer qu'à partir d'une distance d1 le transpondeur n'est plus capable de démoduler les données véhiculées par le signal 26 dans la mesure où ce signal s'est transformé en niveau continu et constant correspondant sensiblement à la tension V20 (en négligeant la chute de tension série dans le pont redresseur 13).

Le fonctionnement du système se trouve amélioré par la présence du circuit de régulation 30. Ce fonctionnement est illustré par la courbe 36 en figure 3 où on néglige la consommation du circuit 16. Une première différence avec la courbe 26 est que la présence de la résistance 31 en série avec la diode Zener 32 (ou avec le condensateur 34 de lissage) provoque une chute de la tension par rapport au cas précédent dans la mesure où l'énergie du champ rayonné n'est pas modifiable. Il en découle que la distance d2 à laquelle apparaît l'écrêtement au niveau de tension V20, en aval du pont redresseur, est nettement plus proche que la distance d1. Par conséquent, le fonctionnement est maintenu pour une plage de portée plus importante. Par contre, la présence de cette résistance qui répartit l'énergie entre celle à destination de l'alimentation et celle à destination du démodulateur atténue l'amplitude disponible pour le démodulateur. Cette atténuation est encore plus importante à partir du moment où la diode Zener 32 est en avalanche. En figure 3, on a supposé que le niveau de tension V32, correspondant au seuil de la diode Zener 32 reporté entre les bornes 14 et 15 (en tenant compte de la résistance 31) est atteint pour une distance d0. Tant que cette distance n'est pas atteinte, c'est-à-dire tant que le transpondeur est plus loin de la borne que ce seuil, l'atténuation en amplitude de la modulation opérée par la résistance 31 est relativement faible et peut être négligée. Les courbes 26 et 36 sont confondues pour des distances supérieures à d0 (partie gauche de la figure 3). Entre les distances d0 et d2, la diode 32 est en avalanche et l'amplitude de la modulation du signal 36 est atténuée. A partir de la distance d2, les diodes du circuit 20 sont en avalanche et la modulation ne peut plus être détectée.

Il est clair que le recours à un circuit de régulation 30 tel que décrit par la figure 1 constitue déjà une amélioration par rapport au simple recours au circuit de limitation en amont du pont de redressement. Toutefois, il est nécessaire d'effectuer un compromis entre la valeur donnée à la résistance 31 et la zone dite "d'éblouissement" c'est-à-dire la plage de distances (distances inférieures à d2) dans laquelle le transpondeur ne peut plus détecter de données. Plus la résistance 31 est de valeur importante, plus l'allure de la courbe sera proche de l'allure 26 sans régulateur. Plus la valeur de la résistance est faible, plus on supprime la zone d'éblouissement mais plus la modulation des données est de faible amplitude entre les distances d0 et d2.

Une autre solution connue pour résoudre le problème de tension variant en fonction de la distance consiste à limiter la puissance d'émission de la borne. Un inconvénient d'une telle solution est cependant que cela limite alors la portée du système à transpondeur. De plus, les champs magnétiques que sont censés supporter les transpondeurs sont le plus souvent imposés par des normes et l'application des normes actuellement en vigueur conduit à ce que le champ magnétique reçu par le transpondeur, lorsque son moyen d'écrêtement se met en oeuvre, est nettement inférieur au champ magnétique maximal que le transpondeur doit être capable de supporter d'après les normes. Par conséquent, le transpondeur est souvent alimenté par un signal écrêté par le circuit 20 et les informations sont alors perdues.

Les problèmes ci-dessus sont encore plus critiques pour des transpondeurs à faible consommation. En effet, dans ce cas, les circuits internes au transpondeur prévus pour consommer faiblement ne sont pas capables de supporter des tensions élevées, de sorte que le moyen d'écrêtement doit être dimensionné relativement faiblement.

Un objet de la présente invention est de pallier les inconvénients des transpondeurs électromagnétiques connus du point de vue des effets néfastes des moyens d'écrêtement sur la démodulation d'amplitude.

L'invention vise, plus particulièrement, à proposer un nouveau transpondeur électromagnétique qui puisse supporter des champs magnétiques élevés à proximité d'une borne de lecture-écriture, sans pour autant nuire à la récupération des données transmises par cette borne.

La présente invention vise également à proposer une solution qui ne nécessite aucune modification des bornes de lecture-écriture et qui soit donc compatible avec les systèmes de lecture-écriture existants.

L'invention vise également à proposer une solution qui soit compatible avec la recherche d'une consommation minimale du transpondeur.

L'invention vise en outre à proposer une solution qui ne nécessite aucune modification des circuits électroniques classiques (démodulateur et circuit de traitement des données) du transpondeur.

Pour atteindre ces objets, la présente invention prévoit un transpondeur électromagnétique comprenant un circuit oscillant propre à extraire d'un champ rayonnant un signal haute fréquence modulé en amplitude, des moyens pour extraire dudit signal haute fréquence une tension approximativement continue d'alimentation, un démodulateur de données véhiculées par le signal haute fréquence, et des moyens pour réguler séparément la tension d'alimentation et une tension utile véhiculant les données. Le moyen de régulation de la tension du signal utile a une constante de temps supérieure au moyen de régulation de la tension d'alimentation.

Selon un mode de réalisation de la présente invention, le transpondeur comporte un moyen de redressement de la tension prélevée aux bornes du circuit oscillant et, en série entre deux bornes de sortie redressée de ce moyen de redressement, un premier transistor et un deuxième transistor, le point milieu de cette association en série constituant une borne de prélèvement du signal à destination du démodulateur.

Selon un mode de réalisation de la présente invention, la borne de commande du deuxième transistor est connectée au point milieu d'un pont diviseur résistif entre ladite borne délivrant le signal à démoduler et la masse, un condensateur étant connecté entre ladite borne de commande et la masse.

Selon un mode de réalisation de la présente invention, le retard à la prise en compte de la variation de la tension par le deuxième régulateur est fixé par la valeur dudit condensateur.

Selon un mode de réalisation de la présente invention, ledit premier transistor est connecté en parallèle avec une résistance et est commandé par une mesure de la tension aux bornes de sortie du moyen de redressement.

Selon un mode de réalisation de la présente invention, lesdits transistors sont des transistors MOS.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 à 3 qui ont été décrites précédemment sont destinées à exposer l'état de la technique et le problème posé ;
la figure 4 représente, de façon schématique et partielle, un mode de réalisation d'un transpondeur électromagnétique selon la présente invention ; et
la figure 5 illustre le fonctionnement d'un transpondeur selon la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les différents circuits de traitement et d'exploitation des signaux reçus et émis par le transpondeur n'ont pas été détaillés et ne font pas l'objet de l'invention. On notera simplement que les circuits de réception sont destinés à recevoir des signaux en modulation par saut d'amplitude avec, de préférence, un taux de modulation inférieur à 30 %.

Une caractéristique de la présente invention est de prévoir une régulation séparée de la tension d'alimentation des circuits électroniques du transpondeur et de la tension d'entrée du démodulateur. Une autre caractéristique de l'invention est que ces régulateurs de tension sont prévus avec des constantes de temps différentes. En d'autres termes, pour réguler la tension d'attaque du démodulateur, on choisira un régulateur relativement lent par rapport à la fréquence de modulation véhiculée par la porteuse de téléalimentation (par exemple, une fréquence équivalente à 106 kbits par seconde). Côté tension d'alimentation, on choisira de préférence un régulateur à réaction rapide pour lisser le plus possible la tension d'alimentation du transpondeur.

On aurait pu penser que le recours à un régulateur de tension pour le signal à démoduler en amplitude nuirait à la détection de variation d'amplitude donc à la démodulation. Toutefois, grâce au retard apporté à la réaction de ce régulateur, l'invention s'affranchit de ce problème.

Un avantage qu'il y a à prévoir deux régulateurs affectés chacun à une fonction différente (régulation d'alimentation et récupération de la modulation d'amplitude) est qu'il est désormais possible de dimensionner le régulateur destiné à la tension d'alimentation uniquement pour ce besoin. Par conséquent, il n'est plus nécessaire d'effectuer de compromis sur le choix d'une valeur de résistance comme c'était le cas dans l'art antérieur (résistance 31, figure 1). Le régulateur destiné à la tension d'alimentation peut donc être prévu sans chute résistive série.

De préférence, la valeur de la tension fournie par le régulateur du démodulateur est inférieure à la valeur de la tension fournie par le régulateur d'alimentation. Ainsi, on garantit un fonctionnement adéquat du démodulateur en garantissant une alimentation toujours supérieure au signal à démoduler.

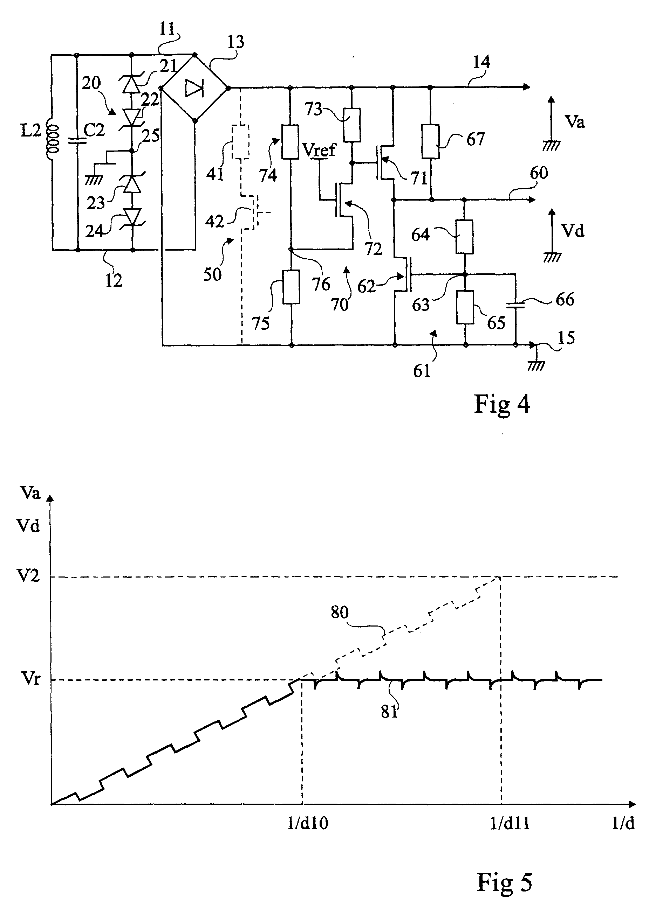

La figure 4 représente un mode de réalisation d'un transpondeur électromagnétique selon la présente invention. La représentation de la figure 4 est à rapprocher de celle de la figure 1 en considérant que les parties du transpondeur destinées à la démodulation et au traitement des signaux obtenus n'ont pas été représentées (blocs 16 et 17 de la figure 1). De même, l'étage 50 de rétromodulation constitué du transistor 42 et de la résistance 41 a été illustré en pointillés à la figure 4 pour insister sur son caractère accessoire au sens de l'invention.

Comme précédemment, un transpondeur électromagnétique est basé sur l'emploi d'un circuit oscillant parallèle constitué d'une inductance L2 en parallèle avec un condensateur C2 entre deux bornes 11 et 12 d'entrée alternative d'une entité de redressement 13 (par exemple un pont de diodes). Toujours comme précédemment, l'entrée du pont de diodes est associée à un circuit 20 de protection constitué, par exemple, de deux associations en série-opposition de diodes Zener 21, 22 et 23, 24 entre chacune des bornes 11 et 12 et une borne 25 de masse.

La présente invention intervient en aval du pont redresseur 13 pour réguler séparément une tension d'alimentation Va, délivrée entre les bornes 14 et 15 de sortie redressée du pont 13 et destinée aux circuits électroniques de traitement du transpondeur, et une tension Vd délivrée entre une borne 60 et la borne 15 et véhiculant le signal de données utile à destination du démodulateur (17, figure 1) du transpondeur.

Le régulateur 61 destiné aux signaux utiles est essentiellement constitué d'un transistor 62 (par exemple, un transistor MOS) connecté entre les bornes 60 et 15, la grille de ce transistor étant reliée au point milieu 63 d'un pont diviseur de tension constitué, par exemple, de deux résistances 64 et 65 en série entre les bornes 60 et 15. Un élément retardateur de la régulation de la tension Vd est constitué d'un condensateur 66 connecté en parallèle avec la résistance 65, c'est-à-dire entre la grille du transistor 62 et la masse. La borne 60 est en outre reliée à la borne 14 au moyen d'un élément résistif 67.

En l'absence d'autres constituants dans le circuit, le transistor 62 agit comme un régulateur du niveau de tension Vd. En effet, toute augmentation de la tension aux bornes 14 et 15 de sortie redressée du pont 13 se traduit par une augmentation de la tension Vd qui provoque une augmentation proportionnelle de la tension de grille du transistor 62. Cela a pour effet d'accroître la conduction du transistor 62, donc de modifier le rapport de tension fixé par le pont diviseur constitué de la résistance 67 et de la résistance équivalente des composants 62, 64 et 63. Toutefois, l'effet du transistor 62 est retardé au moyen du condensateur 66 qui diffère légèrement l'augmentation de niveau de la tension de grille 63. En supposant maintenant une baisse instantanée de la tension V13 aux bornes 14 et 15 du pont redresseur 13, correspondant à un passage de l'état 1 à l'état 0 (figure 2) du signal de téléalimentation, le transistor 62 deviendra moins passant pour compenser cette baisse mais la tension Vd diminuera pendant un délai fixé par la valeur du condensateur 66 avant que cette baisse soit compensée par une diminution de la conduction du transistor 62.

On voit donc que l'effet de régulation fonctionne à la hausse comme à la baisse mais que les fronts du signal de modulation sont transmis sur la tension Vd et sont donc interprétables par le démodulateur. En effet, s'agissant d'une démodulation d'amplitude entre deux niveaux de tension, un démodulateur d'amplitude de base sera capable d'interpréter les variations de niveaux. Tout front montant correspond à un passage vers un état 1 tandis que tout front descendant correspond à un passage vers un état 0.

Le régulateur 70, destiné à produire la tension d'alimentation Va, est basé, dans l'exemple de la figure 4, sur l'utilisation d'un premier transistor 71 (par exemple, MOS) connecté entre les bornes 14 et 60. La grille de ce transistor est reliée au point milieu d'une association en série d'un deuxième transistor 72 (par exemple MOS) avec une résistance 73, le transistor 72 étant rendu plus ou moins passant selon l'amplitude de la différence entre la tension V13 et une tension de référence Vref. Par exemple, on prévoit un pont diviseur résistif constitué de deux résistances 74 et 75 en série entre les bornes 14 et 15. Le point milieu 76 de ce pont est relié à une des bornes de puissance du transistor 72 dont la grille reçoit la tension de référence Vref. La tension de référence Vref est, par exemple, fournie par les circuits électroniques de traitement du transpondeur ou, de façon plus simple, par une diode Zener (non représentée) associée en série avec une résistance entre les bornes 14 et 15, la tension Vref étant prélevée sur le point milieu de cette association en série. La tension Vref est bien entendue choisie en fonction de la tension minimale du fonctionnement du circuit. Le pont diviseur résistif 74-75 fournit une tension proportionnelle à la tension V13. Par conséquent, la tension de grille du transistor 71 augmentera ou diminuera selon que la tension V13 augmentera ou diminuera respectivement. Cette augmentation ou diminution est, dans le mode de réalisation de la figure 4, basée par rapport à la valeur de référence Vref. Le transistor 71 conduira d'autant plus que sa tension de grille augmentera, et donc que la tension V13 augmentera. Par conséquent, toute augmentation de la tension V13 se traduit par une augmentation de la conduction du transistor 71 pour compenser cet effet sur la tension d'alimentation Va.

Le recours à une tension de référence plutôt qu'un pont diviseur résistif attaquant directement la grille du transistor 71 permet d'augmenter le gain en boucle du régulateur. Toutefois, dans un mode de réalisation simplifié, on pourra bien entendu prévoir d'attaquer directement la grille du transistor 71 par le point milieu d'un pont diviseur résistif entre les bornes 14 et 15. Cela respecte le principe de l'invention qui est de disposer de deux éléments de régulation de tension en série entre les bornes 14 et 15, le point milieu de ces éléments de régulation fournissant la tension Vd avec une constante de temps différente pour le régulateur inférieur. Cela permet qu'en fonctionnement dynamique, ce régulateur soit transparent.

Le fonctionnement du transpondeur de la figure 4 est illustré par la figure 5 qui représente un exemple d'allure des tensions Va et Vd en fonction de l'inverse de la distance. La représentation de la figure 5 est à rapprocher de celle de la figure 3. L'allure de la tension d'alimentation Va est illustrée par le pointillé 80 tandis que l'allure de la tension Vd du signal utile est illustrée par le tracé 81 en trait plein. Tant que la tension Vd n'a pas atteint un seuil fixé par les dimensionnements respectifs des résistances 64, 65, 67 et du transistor 62, ce dernier est bloqué. Le transistor 71 est quant à lui en saturation de sorte qu'il court-circuite la résistance 67, la tension V13 étant trop faible pour engendrer une variation de la conduction des transistors 71 et 72. Par conséquent, dans cette situation de distance supérieure à la distance d10 (c'est-à-dire en partie gauche de la figure 5), les tensions Va et Vd sont approximativement similaires en négligeant les chutes en tension série dans le transistor 71. Quand la tension Vd devient suffisante pour mettre en service le régulateur 61, elle est alors régulée à un niveau moyen prédéterminé Vr, en laissant passer les fronts correspondant aux changements d'état du signal de modulation. La tension Va (tracé en pointillés 80) continue quant à elle d'augmenter avec la diminution de la distance jusqu'à atteindre une distance d11 où la tension du point 76 devient suffisante pour rendre conducteur le transistor 72. Le niveau de la tension Va est alors régulé sur une valeur V2 prédéterminée.

On notera que la résistance 67 permet de transmettre les données à la borne 60 en dehors de la plage de fonctionnement du régulateur de la tension d'alimentation, c'est-à-dire lorsque le transistor 71 est complètement bloqué, la tension V13 étant écrêtée par le circuit 20.

On notera également que les valeurs V1 et V2 des tensions Vr et Va dépendent des dimensionnements respectifs des résistances du circuit et des transistors utilisés.

On notera en outre que les niveaux de tension Vr et V2 sont inférieurs au seuil d'activation du moyen d'écrêtement 20. Grâce à la régulation opérée par l'invention, ce seuil peut désormais être choisi uniquement pour respecter les contraintes de sécurité du circuit.

Bien que cela n'ait pas été représenté en figure 4, un condensateur de lissage (18, figure 1) sera généralement prévu entre les bornes 14 et 15 pour lisser la tension redressée.

Un avantage de la présente invention est qu'elle rend la tension de démodulation indépendante de la tension d'alimentation.

Un autre avantage de la présente invention est qu'elle accroît la plage de fonctionnement des transpondeurs.

Un autre avantage de la présente invention est qu'elle préserve la sécurité complète du transpondeur en prévoyant un circuit d'écrêtement 20 en amont du pont de redressement. De plus, cette protection est valable aussi bien pour des surtensions brèves que des surtensions durables, contrairement à ce que donnerait une solution consistant à ne réguler que la tension d'alimentation.

Un autre avantage de la présente invention est qu'elle améliore la sécurité des transpondeurs vis-à-vis de certaines tentatives de fraudes. En effet, une des possibilités classique de fraude consiste à mesurer la variation de consommation de l'alimentation du transpondeur à partir des bornes externes de son circuit intégré. L'invention élimine cette possibilité en mettant en oeuvre un système de régulation qui rend invisible ces variations aux bornes de l'antenne, donc aux bornes externes du circuit intégré.

Bien entendu, la présente invention est susceptible de diverses variantes et modifications qui apparaîtront à l'homme de l'art. En particulier, d'autres composants que ceux indiqués dans le mode de réalisation pris pour exemple pourront être utilisés. A cet égard, on notera que, par exemple, on pourra utiliser des transistors bipolaires à la place des transistors MOS et que les éléments résistifs pourront être formés de constituants différents que de simples résistances (par exemple, être formés de transistors). De plus, le dimensionnement d'un transpondeur mettant en oeuvre la présente invention est à la portée de l'homme du métier à partir des indications fonctionnelles données ci-dessus et des caractéristiques de fonctionnement souhaitées pour les niveaux de tension.

## Revendications

1. Transpondeur électromagnétique comprenant :
un circuit oscillant propre à extraire d'un champ rayonnant un signal haute fréquence modulé en amplitude ;
des moyens pour extraire dudit signal haute fréquence une tension approximativement continue d'alimentation ; et
un démodulateur (17) de données véhiculées par le signal haute fréquence,
**caractérisé en ce qu'**il comporte des moyens (61, 70) pour réguler séparément la tension d'alimentation (Va) et une tension utile (Vd) véhiculant les données, le moyen (61) de régulation de la tension du signal utile ayant une constante de temps supérieure au moyen (70) de régulation de la tension d'alimentation.

2. Transpondeur selon la revendication 1, **caractérisé en ce qu'**il comporte un moyen (13) de redressement de la tension prélevée aux bornes du circuit oscillant et, en série entre deux bornes de sortie redressée (14, 15) de ce moyen de redressement, un premier transistor (71) et un deuxième transistor (62), le point milieu (60) de cette association en série constituant une borne de prélèvement du signal a destination du démodulateur (17) .

3. Transpondeur selon la revendication 2, **caractérisé en ce que** la borne de commande (63) du deuxième transistor est connectée au point milieu d'un pont diviseur résistif (64, 65) entre ladite borne (60) délivrant le signal à démoduler et à la masse (15), un condensateur (66) étant connecté entre ladite borne de commande et la masse.

4. Transpondeur selon la revendication 3, **caractérisé en ce que** le retard à la prise en compte de la variation de la tension par le deuxième régulateur est fixé par la valeur dudit condensateur (66).

5. Transpondeur selon l'une quelconque des revendications 2 à 4, **caractérisé en ce que** ledit premier transistor (71) est connecté en parallèle avec une résistance (67) et est commandé par une mesure de la tension aux bornes (14, 15) de sortie du moyen de redressement (13).

6. Transpondeur selon l'une quelconque des revendications 2 à 5, **caractérisé en ce que** lesdits transistors sont des transistors MOS.
